# EUROPEAN PATENT SPECIFICATION

(11) **EP 3 233 340 B1**
(45) Date of publication and mention of the grant of the patent: **26.07.2023**
(21) Application number: 14833599.5
(22) Date of filing: 15.12.2014
(51) Int. Cl.: B23C 5/10

(54) **ROTARY CUTTING TOOL HAVING A PREDETERMINED NUMBER OF LEFT AND RIGHT HANDED HELICAL FLUTES AND END FACE CUTTING TEETH**
DREHSCHNEIDWERKZEUG MIT EINER VORGEGEBENEN ANZAHL VON LINKS- UND RECHTSLÄUFIGEN SPIRALNUTEN UND STIRNSCHNEIDZÄHNEN
OUTIL DE COUPE AYANT UN NOMBRE PRÉDÉTERMINÉ DE CANNELURES HÉLICOÏDALES À GAUCHE ET À DROITE ET DE DENTS DE COUPE À LA FACE TERMINALE

(43) Date of publication of application: 25.10.2017
(73) Proprietor: Iscar Ltd., 24959 Tefen (IL)
(72) Inventor: SHPIGELMAN, Leonid, 21771 Carmiel (IL); SEGAL, Igor, 21021 Maalot (IL)
(74) Representative: Vossius & Partner Patentanwälte Rechtsanwälte mbB
(86) International application number: PCT/IL2014/051094
(87) International publication number: WO 2016/098092

(56) References cited:
- WO-A1-2014/108180
- US-A1- 2014 161 546

## Description

### FIELD OF THE INVENTION

The subject matter of the present application relates to rotary cutting tools having left and right handed helical flutes and end face cutting teeth, in particular for performing cutting operations on composite laminated materials, such as fiberglass.

### BACKGROUND OF THE INVENTION

A rotary cutting tool can be provided with left and right handed helical flutes recessed in a peripheral surface of the rotary cutting tool. An example of such a rotary cutting tool is disclosed in, for example, US 6,234,725, where the left and right handed helical flutes intersect to form intersecting cutters (i.e. discrete peripheral cutting teeth).

In some other rotary cutting tools, the number of left handed helical flutes is different to the number of right handed helical flutes in order to avoid axial gaps in the cutting zone, as discussed in US 4,990,035.

A rotary cutting tool can also be provided with end face cutting edges at a top portion thereof. An example of such rotary cutting tools is disclosed in, for example, US 8,277,152.

US2014/161546 discloses a rotary cutting tool according to the preamble of claim 1 and more specifically an end mill having a plurality of teeth configured for both roughing and semi-finishing applications, the teeth being alternated with a plurality of flutes. At least one tooth of the plurality of cutting teeth is a serrated tooth formed with serrations along a relief surface thereof and at least one other tooth is free of serrations

It is an object of the present application to provide a new and improved rotary cutting tool.

It is a still further object of the present application to provide a rotary cutting tool that rotates in a stable manner about its longitudinal axis.

It is a yet further object of the present application to provide a rotary cutting tool where all the peripheral cutting teeth, at a similar axial distance from the end face surface, wear out at substantially the same rate.

### SUMMARY OF THE INVENTION

In accordance with a first aspect of the subject matter of the present application, there is provided a rotary cutting tool, having a longitudinal axis about which the rotary cutting tool is rotatable in a direction of rotation, the rotary cutting tool comprising:
a cutting portion and a mounting portion extending therefrom, the cutting portion comprising:
   an end face surface, intersected by the longitudinal axis, and a peripheral surface extending from the end face surface towards the mounting portion, the peripheral surface comprising respective pluralities of main and auxiliary flutes recessed therein that extend helically with opposite hand about the longitudinal axis;
   a plurality of end face cutting teeth formed on the end face surface, each end face cutting tooth comprising an end tooth major surface that generally faces the direction of rotation, and an end cutting edge formed at the intersection of the end face surface and the end tooth major surface, each end face cutting tooth being defined between circumferentially adjacent end gashes, each of which end gashes interrupts an intersection of the peripheral surface with the end face surface at an associated one of the plurality of main flutes; wherein
      the number of main flutes and auxiliary flutes are different, each being wholly divisible by, and greater than, the number of end face cutting teeth;
      the end gashes are evenly circumferentially distributed with respect to the main flutes; and
      in each cross sectional view of the cutting portion, taken perpendicular to the longitudinal axis through the end gashes, an imaginary contour line defined by a peripheral contour of the peripheral surface of one of the end face cutting teeth is in rotationally aligned relationship, about the longitudinal axis, with the peripheral contour of the peripheral surfaces of all other end face cutting teeth.

It is understood that the above-said is a summary, and that features described hereinafter may be applicable in any combination to the subject matter of the present application, for example, any of the following features may be applicable to the rotary cutting tool.

The main flutes are equally spaced apart. The auxiliary flutes are equally spaced apart.

Each end gash can extend circumferentially along the intersection of the end face surface and the peripheral surface, in the direction of rotation, and can interrupt exactly two adjacent main flutes along said intersection.

Each end gash can extend towards the mounting portion and can interrupt at least two auxiliary flutes on the peripheral surface.

Each end gash can interrupt exactly two auxiliary flutes on the peripheral surface.

Each end face cutting tooth can be defined axially at an end furthest from the mounting portion by the end face surface and radially by circumferentially adjacent end gashes.

Adjacent pairs of main and auxiliary flutes intersect on the peripheral surface to form discrete peripheral cutting teeth.

Each peripheral cutting tooth can comprise a main peripheral cutting edge formed at the intersection of the peripheral surface and the rotationally leading main flute of the adjacent pair of main flutes and an auxiliary peripheral cutting edge formed at the intersection of the peripheral surface and the rotationally leading auxiliary flute of the adjacent pair of auxiliary flutes.

A peripheral relief surface can extends between the main peripheral cutting edge and the auxiliary peripheral cutting edge on each peripheral cutting tooth.

The rotary cutting tool can be one selected from a group consisting of an end-mill cutter and a router bit.

The rotary cutting tool can comprise a unitary integral one-piece construction.

In each cross sectional view of the cutting portion taken perpendicular to the longitudinal axis but not through the end gashes, the cutting portion can exhibit N-fold rotational symmetry about the longitudinal axis, where N is equal to the greatest common divisor of the number of main flutes and the number of auxiliary flutes.

At least one of the end cutting edges can form an extended end cutting edge that extends to a radially central portion of the cutting portion, as seen in an end view of the rotary cutting tool taken along the longitudinal axis. In each cross sectional view of the cutting portion taken perpendicular to the longitudinal axis through the end gashes the cutting portion can have X equal tooth sectors where X is equal to number of end face cutting teeth minus the number of extended cutting edges.

The cutting portion can exhibit 180° rotational symmetry about the longitudinal axis.

The number of main and auxiliary flutes, respectively, can be greater than or equal to 4 and less than or equal to 24.

The number of end face cutting teeth can be greater than or equal to 2 and less than or equal to 8.

The number of main flutes can be greater than the number of auxiliary flutes.

The number of main flutes can be exactly three times the number of end face cutting teeth. The number of auxiliary flutes can be exactly twice the number of end face cutting teeth.

The number of end face cutting teeth can be 4. The number of main flutes can be 12. The number of auxiliary flutes can be 8.

The rotary cutting tool can be a right handed rotary cutting tool, the main flutes can be right handed helical flutes, and the auxiliary flutes can be left handed helical flutes, or the rotary cutting tool can be a left handed rotary cutting tool, the main flutes can be left handed helical flutes, and the auxiliary flutes can be right handed helical flutes.

The cutting portion can be generally cylindrical.

All the main flutes can be helically aligned about the longitudinal axis with a main flute helix having a main flute helix angle. All the auxiliary flutes can be helically aligned about the longitudinal axis with an auxiliary flute helix having an auxiliary flute helix angle. The main flute helix angle can be less than the auxiliary flute helix angle in absolute value.

The mounting portion can comprise a threaded portion.

In each cross sectional view of the cutting portion taken perpendicular to the longitudinal axis, all the main flutes can have an equal main flute depth, as measured in the radial direction.

Each of the main flutes and each of the auxiliary flutes can open out to the end face surface or one of the end gashes.

Each of the end gashes has a gash angle δ, each gash angle δ can be in the range 30° < δ < 50°.

Each end cutting edge can define a dish angle, as measured with respect to a dish plane that is oriented perpendicularly to the longitudinal axis.

The auxiliary core diameter defined by the auxiliary flutes can be greater than the main core diameter defined by the main flutes.

The peripheral surface of one of the end face cutting teeth is in rotationally aligned relationship, about the longitudinal axis, with the peripheral surface of all other end face cutting teeth.

### BRIEF DESCRIPTION OF THE FIGURES

For a better understanding of the present application and to show how the same may be carried out in practice, reference will now be made to the accompanying drawings, in which:
**Fig. 1** is a perspective view of a rotary cutting tool;
**Fig. 2** is a side view of the rotary cutting tool in Fig. 1;
**Fig. 3** is an end view of the rotary cutting tool in Fig. 1;
**Fig. 4** is a detailed view of a cutting portion of the rotary cutting tool in Fig. 1;
**Fig. 5** is a detailed view of the cutting portion of the rotary cutting tool in Fig. 2;
**Fig. 6a** is a cross sectional view of the cutting portion of the rotary cutting tool where only main flutes are shown, taken perpendicular to the longitudinal axis;
**Fig. 6b** is a cross sectional view of the cutting portion of the rotary cutting tool where only auxiliary flutes are shown, taken perpendicular to the longitudinal axis;
**Fig. 7** is a cross sectional view of the cutting portion taken along the line VII-VII in Fig. 2; and
**Fig. 8** is a cross sectional view of the cutting portion taken along the line VIII-VIII in Fig. 2.

It will be appreciated that for simplicity and clarity of illustration, elements shown in the figures have not necessarily been drawn to scale. For example, the dimensions of some of the elements may be exaggerated relative to other elements for clarity, or several physical components may be included in one functional block or element. Where considered appropriate, reference numerals may be repeated among the figures to indicate corresponding or analogous elements.

### DETAILED DESCRIPTION OF THE INVENTION

In the following description, various aspects of the subject matter of the present application will be described. For purposes of explanation, specific configurations and details are set forth in sufficient detail to provide a thorough understanding of the subject matter of the present application.

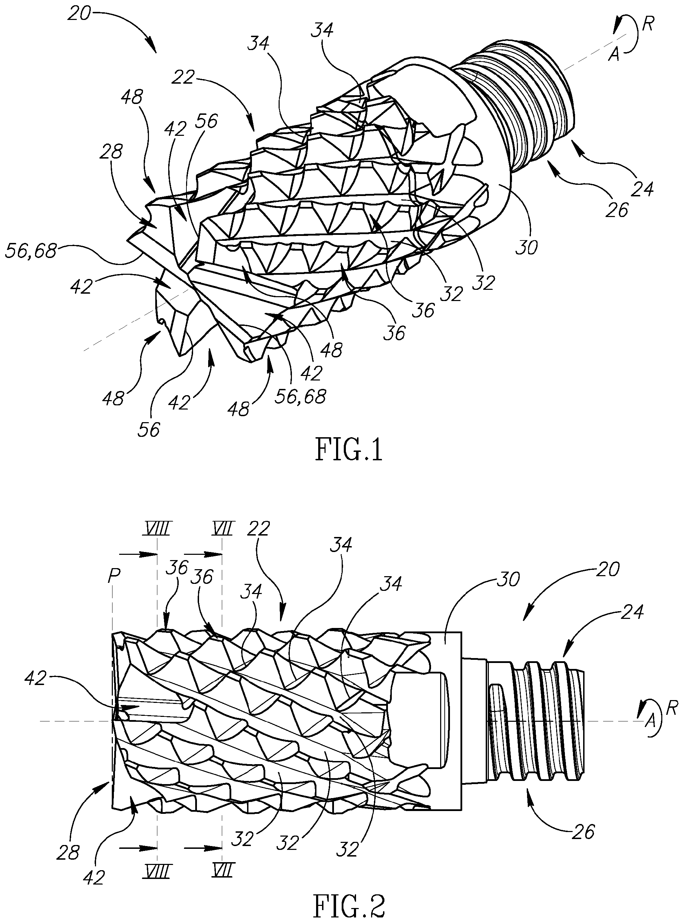

Attention is first drawn to Fig. 1 and 2, showing a rotary cutting tool **20.** The rotary cutting tool **20** can be one selected from a group consisting of an end-mill cutter and a router bit. The rotary cutting tool **20** can be used for ramp-down and helical interpolation cutting operations. The rotary cutting tool **20** can be used for the cutting of composite laminated material, such as fiberglass. In accordance with some embodiments of the subject matter of the present application, the rotary cutting tool **20** can be made from cemented carbide. The rotary cutting tool **20** can have a unitary integral one-piece construction. The cutting portion **22** can exhibit 180° rotational symmetry about the longitudinal axis **A.**

The rotary cutting tool **20** has a longitudinal axis **A** about which the rotary cutting tool **20** is rotatable in a direction of rotation **R.** The rotary cutting tool **20** has a cutting portion **22** and a mounting portion **24,** which extends from the cutting portion **22,** for releasably attaching the rotary cutting tool **20** to a complementary tool holder. As seen in Figs, 1 and 2, in this nonlimiting example, the mounting portion **24** can include a threaded portion **26** for threadingly engaging a corresponding holder threaded portion on the tool holder.

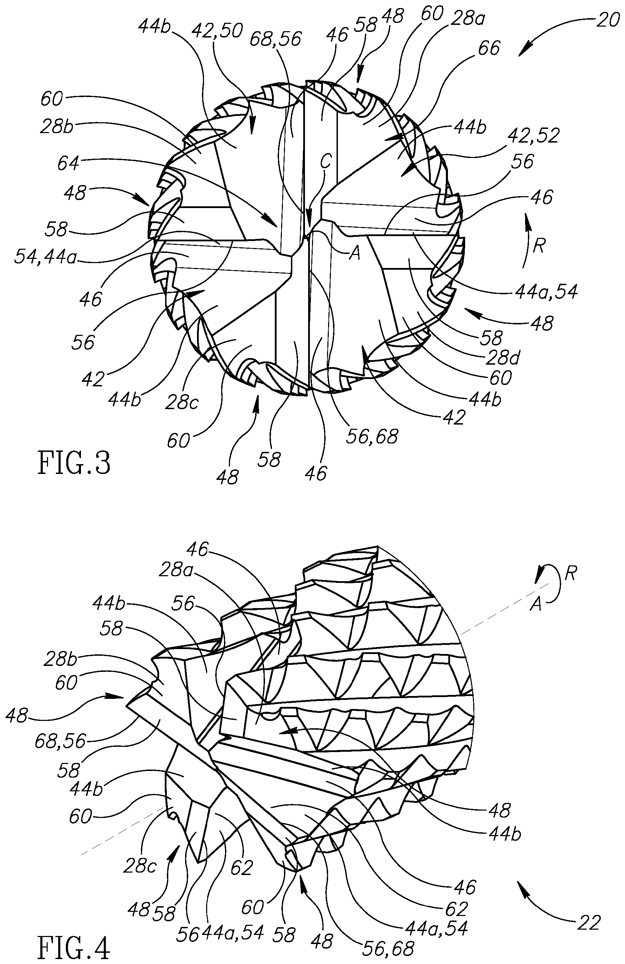

Referring now to Figs. 3 to 5, the cutting portion **22** includes an end face surface **28** intersected by the longitudinal axis **A.** The cutting portion **22** includes a peripheral surface **30** that extends from the end face surface **28** towards the mounting portion **24.** In accordance with some embodiments of the subject matter of the present application the cutting portion **22** can have a generally cylindrical shape. Referring in particular to Fig. 3, the end face surface **28** can be formed by a plurality, for example four, end face sub-surfaces **28a, 28b, 28c, 28d.**

The peripheral surface **30** includes a plurality of main flutes 32 and a plurality of auxiliary flutes **34** respectively recessed in the peripheral surface **30.** The respective pluralities of main and auxiliary flutes **32, 34** extend helically with opposite hand about the longitudinal axis **A.** In accordance with some embodiments of the subject matter of the present application, all the main flutes **32** can be helically aligned about the longitudinal axis **A** with a main flute helix **H1** that has a main flute helix angle **α**. All the auxiliary flutes **34** can be helically aligned about the longitudinal axis **A** with an auxiliary flute helix **H2** that has an auxiliary flute helix angle **β**. The main flute helix angle **α** can be less than the auxiliary flute helix angle **β** in absolute value.

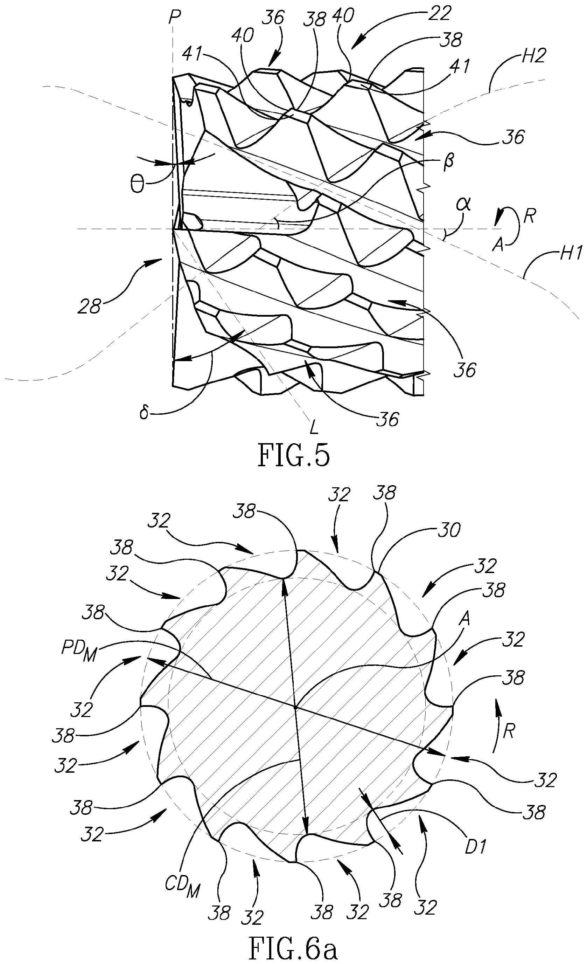

Referring now to Fig. 6a, showing a cross sectional view of the cutting portion **22** of the rotary cutting tool **20** where only the main flutes **32** are shown, the main flutes **32** are equally spaced apart. The main flutes **32** define a main core diameter **CD_{M}** and a main peripheral diameter **PD_{M}** associated with the outside diameter of the main peripheral cutting edges **38.** In accordance with some embodiments of the subject matter of the present application, all the main flutes **32** can have an equal main flute depth **D1,** defined as the distance, measured in the radial direction, between two concentric circles associated with the main core diameter **CD_{M}** and the outside diameter of the main peripheral cutting edges **38,** respectively.

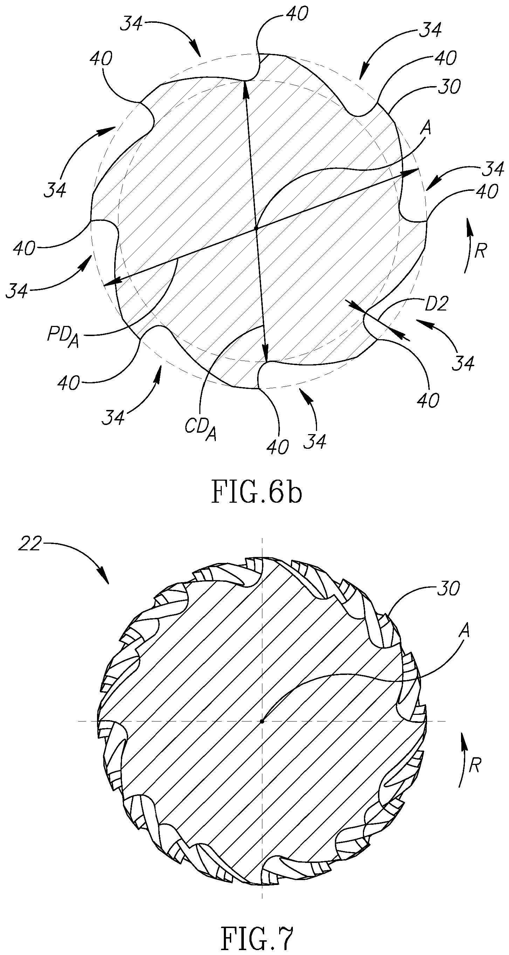

Referring now to Fig. 6b, showing a cross sectional view of the cutting portion **22** of the rotary cutting tool **20** where only the auxiliary flutes **34** are shown, the auxiliary flutes **34** are equally spaced apart. The auxiliary flutes **34** define an auxiliary core diameter **CD_{A}** and an auxiliary peripheral diameter **PD_{A}** associated with the outside diameter of the auxiliary peripheral cutting edges **40.** In accordance with some embodiments of the subject matter of the present application, all the auxiliary flutes **34** can have an equal auxiliary flute depth **D2,** defined as the distance, measured in the radial direction, between two concentric circles associated with the auxiliary core diameter **CD_{A}** and the outside diameter of the auxiliary peripheral cutting edges **40,** respectively. The auxiliary core diameter **CD_{A}** can be greater than the main core diameter **CD_{M}**. The main peripheral diameter **PD_{M}** can be the same as the auxiliary peripheral diameter **PD_{A}**. The main flute depth **D1** may be larger than the auxiliary flute depth **D2,**

Referring to Fig. 2, adjacent pairs of main and auxiliary flutes **32, 34** intersect on the peripheral surface **30** to form discrete peripheral cutting teeth **36.** Each peripheral cutting tooth **36** includes a main peripheral cutting edge **38** formed at the intersection of the peripheral surface **30** and the rotationally leading main flute **32** of the adjacent pair of main flutes **32.** Each peripheral cutting tooth **36** includes an auxiliary peripheral cutting edge **40** formed at the intersection of the peripheral surface **30** and the rotationally leading auxiliary flute **34** of the adjacent pair of auxiliary flutes **34.** A peripheral relief surface **41** can extend between the main peripheral cutting edge **38** and the auxiliary peripheral cutting edge **40** on each peripheral cutting tooth **36.** It is known that peripheral cutting teeth **36** configured in accordance with the subject matter of the present application are beneficial for reducing delamination when performing cutting operations on composite laminated materials, such as, for example, fiberglass.

Referring now to Figs. 3 to 5, the cutting portion **22** includes a plurality of end gashes **42.** Gashes, referred to as end gashes in this specification, are known in the field of rotary cutting tools. Said gashes are notches that define a space for allowing the evacuation of chips away from a cutting region located at the end face surface **28** during axial cutting operations. Each end gash **42** interrupts the intersection of the peripheral surface **30** and the end face surface **28** at the main flute **32** with which the respective end gash **42** is associated. Stated differently, each end gash **42** extends across the intersection of the peripheral surface **30** and the end face surface **28** and opens out to the peripheral surface **30** and the end face surface **28** at an associated one of the plurality of main flutes **32.**

The end gashes **42** are evenly circumferentially distributed, with respect to the main flutes **32.** That is to say, every M^{th} main flute **32** has an associated end gash **42** where M equals the number of main flutes **32** divided by the number of end gashes **42.** For example, in the nonlimiting example where there are 12 main flutes **32** and 4 end gashes **42,** the end gashes **32** are formed at the first, fourth, seventh and tenth main flutes **32,** respectively. Some of the main flutes **32** do not have an associated end gash **42.**

Each end gash **42** includes a first gash side surface **44a.** The first gash side surface **44a** generally faces the direction of rotation **R.** It is noted that the first gash side surface **44a** intersects the associated main flute **32.** Each end gash **42** includes a second gash side surface **44b.** The second gash side surface **44b** faces generally opposite the first gash side surface **44a.** In accordance with some embodiments of the subject matter of the present application, each end gash **42** can include a gash central surface **46** that extends between the first and second gash side surfaces **44a, 44b.**

Each end gash **42** extends circumferentially along the intersection of the end face surface **28** and the peripheral surface **30,** in the direction of rotation **R,** and can interrupt exactly two adjacent main flutes **32** along said intersection. It is noted that in the case when the end gash **42** interrupts more than one main flute **32** along the intersection of the end face surface **28** and the peripheral surface **30,** the associated main flute **32** of the end gash **42** is the rotationally trailing main flute **32.** Each end gash **42** can extend towards the mounting portion **24** and can interrupt at least two auxiliary flutes **34** on the peripheral surface **30.** Optimally, each end gash **42** can interrupt exactly two auxiliary flutes **34** on the peripheral surface **30.** Each of the end gashes **42** has a gash angle **δ,** defined between an imaginary line **L** which lies on the gash central surface **46** of each end gash **42,** and the longitudinal axis **A.** In a particular application, optimal performance is attained when each gash angle **δ** is in the range 30° < **δ** < 50°. Configuring the end gashes **42** to be configured and dimensioned as defined in the description hereinabove may advantageously provide improved evacuation of the debris that is produced from the workpiece during cutting operations.

As seen best in Fig. 4, in accordance with some embodiments of the subject matter of the present application, each of the main flutes **32** can open out to the end face surface **28** or one of the end gashes **42.** Likewise, each of the auxiliary flutes **34** can open out to the end face surface **28** or one of the end gashes **42.**

The cutting portion **22** includes a plurality of end face cutting teeth **48** formed on the end face surface **28.** Each end face cutting tooth **48** is defined between circumferentially adjacent end gashes **42.** Circumferentially adjacent end gashes **42** consist of a rotationally leading end gash **50** and a rotationally trailing end gash **52.** Each end face cutting tooth **48** is defined axially at an end furthest from the mounting portion **24** by the end face surface **28.** Moreover, each end face cutting tooth **48** is defined radially by circumferentially adjacent end gashes **42.** More precisely, each end face cutting tooth **48** can be defined radially by the first gash side surface **44a** of the rotationally leading end gash **50** and the second gash side surface **44b** of the rotationally trailing end gash **52.** Each end face cutting tooth **48** is defined peripherally by the peripheral surface **30** located between circumferentially adjacent end gashes **42.**

Each end face cutting tooth **48** includes an end tooth major surface **54** that generally faces the direction of rotation **R** and which is formed by the rotationally leading one **50** of circumferentially adjacent end gashes **42.** More precisely, the end tooth major surface **54** is formed by the first gash side surface **44a** of the rotationally leading one **50** of circumferentially adjacent end gashes **42.** The end tooth major surface **54** can be inclined with respect to the longitudinal axis **A.** This is known and is not part of the invention.

Each end face cutting tooth **48** has an end cutting edge **56** that is formed at an intersection of the end face surface **28** and the end tooth major surface **54.** Each end cutting edge **56** has an end rake surface **62** located on the end tooth major surface **54** that extends away from the end cutting edge **56.** Each end cutting edge **56** has an end primary relief surface **58** located on the end face surface **28** that extends away from the end cutting edge **56.** In accordance with some embodiments of the subject matter of the present application, an end secondary relief surface **60** can be located on the end face surface **28** and can extend from the end primary relief surface **58** in a direction away from the end cutting edge **56.** Each of the end primary relief surfaces **58** and, optionally, each of the end secondary relief surfaces **60** can be located on the end face sub-surfaces **28a, 28b, 28c, 28d,** respectively.

Each end cutting edge **56** extends in a direction from a radially outer portion **66** of the cutting portion **22** to the radially inner portion **64** of the cutting portion **22,** as seen in an end view of the rotary cutting tool **20** taken along the longitudinal axis **A** (i.e. Fig. 3). Stated differently, each end cutting edge **56** extends in the generally radial direction. It is noted that each end cutting edge **56** may not necessarily pass through the longitudinal axis **A.**

Each end cutting edge **56** can define a dish angle **θ,** as measured with respect to a dish plane **P** that is oriented perpendicularly to the longitudinal axis **A.** That is to say, each end cutting edge **56** is inclined so that its distance to the mounting portion **24** decreases as it extends towards the radially inner portion **64** of the cutting portion **22,** as seen in a side view of the cutting portion **22** (i.e. Fig. 5).

Referring now to Fig. 7, in accordance with some embodiments of the subject matter of the present application, in each cross sectional view of the cutting portion **22,** taken perpendicular to the longitudinal axis **A,** but not through the end gashes **42,** the cutting portion **22** can exhibit N-fold rotational symmetry about the longitudinal axis **A,** where N is equal to the greatest common divisor of the number of main flutes **32** and the number of auxiliary flutes **34.**

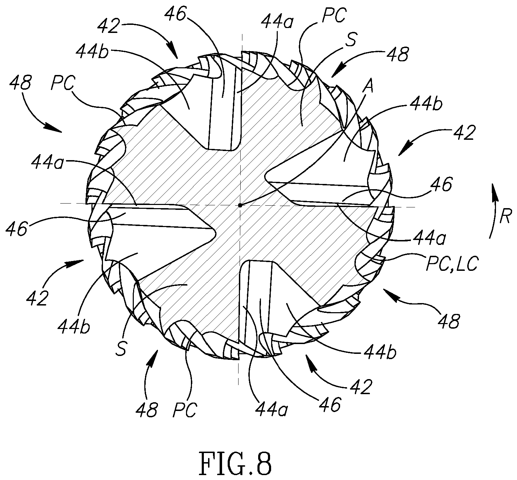

Referring now to Fig. 8, in each cross sectional view of the cutting portion **22,** taken perpendicular to the longitudinal axis **A** through the end gashes **42,** a peripheral contour **PC** of the peripheral surface **30** of one end face cutting tooth **48** defines an imaginary contour line **LC.** It is noted that the peripheral contour **PC** is defined by the contour of the fluted peripheral surface **30** located between adjacent end gashes **42.** The imaginary contour line **LC** is in rotationally aligned relationship, about the longitudinal axis **A,** with the peripheral contour **PC** of the peripheral surfaces **30** of all other end face cutting teeth **48.** Thus, the peripheral surface **30** of one of the end face cutting teeth **48** is in rotationally aligned relationship, about the longitudinal axis **A,** with the peripheral surface **30** of all other end face cutting teeth **48.**

In order to allow cutting operations in a partial axial direction, at least one of the end cutting edges **56** forms an extended end cutting edge **68** that extends to a radially central portion **C** of the cutting portion **22,** as seen in an end view of the rotary cutting tool **20** taken along the longitudinal axis A (i.e. Fig. 3). In the case of an odd number of end face cutting teeth **48,** one end cutting edge **56** forms an extended cutting edge **68.** In the case of an even number of end face cutting teeth **48,** two end cutting edges **56** form extended cutting edges **68.** Thus, in accordance with some embodiments of the subject matter of the present application, referring now to Fig. 8, in each cross sectional view of the cutting portion **22** taken perpendicular to the longitudinal axis **A** through the end gashes **42,** the cutting portion **22** can have X equal tooth sectors **S,** where X is equal to number of end face cutting teeth **48** minus the number of extended cutting edges **68.** Stated differently, the cutting portion **22** can have X identical end gashes **42.**

The number of main flutes **32** and auxiliary flutes **34** are different. The number of main and auxiliary flutes **32, 34** are each wholly divisible by, and greater than, the number of end face cutting teeth **48.** In accordance with some embodiments of the subject matter of the present application, the number of end face cutting teeth **48** can be greater than or equal to 2 and less than or equal to 8. The number of main and auxiliary flutes **32, 34,** respectively, can be greater than or equal to 4 and less than or equal to 24. The number of main flutes **32** can be greater than the number of auxiliary flutes **34.** The number of main flutes **32** can be exactly three times the number of end face cutting teeth **48.** The number of auxiliary flutes **34** can be exactly twice the number of end face cutting teeth **48.** In a particular application, optimal performance is attained when the number of end face cutting teeth **48** is equal to 4, the number of main flutes **32** is equal to 12 and the number of auxiliary flutes **34** is equal to 8.

In accordance with some embodiments of the subject matter of the present application, the rotary cutting tool **20** can be a right handed rotary cutting tool, the main flutes **32** can be right handed helical flutes and the auxiliary flutes **34** can be left handed helical flutes. Alternatively, the rotary cutting tool **20** can be a left handed rotary cutting tool, the main flutes **32** can be left handed helical flutes, and the auxiliary flutes **34** can be right handed helical flutes.

It should be noted that a feature of the subject matter of the present application is that, when the rotary cutting tool **20** rotates about the longitudinal axis **A,** stable rotation is attained. By virtue of the imaginary contour line **LC** being in rotationally aligned relationship, about the longitudinal axis **A,** with the peripheral contour **PC** of the peripheral surfaces **30** of all other end face cutting teeth **48,** the peripheral cutting teeth **36** located at the end face cutting teeth **48** and at a similar axial distance from the end face surface **28,** wear out at substantially the same rate during rotary cutting operations, thus advantageously increasing the tool life of the rotary cutting tool **20.**

## Claims

1. A rotary cutting tool (20), having a longitudinal axis (A) about which the rotary cutting tool (20) is rotatable in a direction of rotation (R), the rotary cutting tool (20) comprising:
a cutting portion (22) and a mounting portion (24) extending therefrom, the cutting portion (22) comprising:
an end face surface (28), intersected by the longitudinal axis (A), and a peripheral surface (30) extending from the end face surface (28) towards the mounting portion (24), the peripheral surface (30) comprising a plurality of main flutes (32) recessed therein that extend helically about the longitudinal axis (A);
a plurality of end face cutting teeth (48) formed on the end face surface (28), each end face cutting tooth (48) comprising an end tooth maj or surface (54) that generally faces the direction of rotation (R), and an end cutting edge (56) formed at the intersection of the end face surface (28) and the end tooth major surface (54), each end face cutting tooth (48) being defined between circumferentially adjacent end gashes (42), each of which end gashes (42) interrupts an intersection of the peripheral surface (30) with the end face surface (28) at an associated one of the plurality of main flutes (32); wherein
the end gashes (42) are evenly circumferentially distributed with respect to the main flutes (32); and
in each cross sectional view of the cutting portion (22), taken perpendicular to the longitudinal axis (A) through the end gashes (42), an imaginary contour line (LC) defined by a peripheral contour (PC) of the peripheral surface (30) of one of the end face cutting teeth (48) is in rotationally aligned relationship, about the longitudinal axis (A), with the peripheral contour (PC) of the peripheral surfaces (30) of all other end face cutting teeth (48); **characterized in that**:
the peripheral surface (30) comprises a plurality of auxiliary flutes (34) recessed therein that extend helically about the longitudinal axis (A) with opposite hand to the plurality of main flutes (32); and
the number of main flutes (32) and auxiliary flutes (34) are different, each being wholly divisible by, and greater than, the number of end face cutting teeth (48).

2. The rotary cutting tool (20), according to the preceding claim; wherein:
the main flutes (32) are equally spaced apart; and
the auxiliary flutes (34) are equally spaced apart.

3. The rotary cutting tool (20), according to any one of the preceding claims, wherein each end gash (42) extends circumferentially along the intersection of the end face surface (28) and the peripheral surface (30), in the direction of rotation (R), and interrupts exactly two adjacent main flutes (32) along said intersection.

4. The rotary cutting tool (20), according to any one of the preceding claims, wherein each end gash (42) extends towards the mounting portion (24) and interrupts at least two, and preferably exactly two, auxiliary flutes (34) on the peripheral surface (30).

5. The rotary cutting tool (20), according to any one of the preceding claims, wherein adjacent pairs of main and auxiliary flutes (32, 34) intersect on the peripheral surface (30) to form discrete peripheral cutting teeth (36), and preferably each peripheral cutting tooth (36) comprises;
a main peripheral cutting edge (38) formed at the intersection of the peripheral surface (30) and the rotationally leading main flute (32) of the adjacent pair of main flutes (32); and
an auxiliary peripheral cutting edge (40) formed at the intersection of the peripheral surface (30) and the rotationally leading auxiliary flute (34) of the adjacent pair of auxiliary flutes (34), and more preferably a peripheral relief surface (41) extends between the main peripheral cutting edge (38) and the auxiliary peripheral cutting edge (40) on each peripheral cutting tooth (36).

6. The rotary cutting tool (20), according to any one of the preceding claims, wherein in each cross sectional view of the cutting portion (22) taken perpendicular to the longitudinal axis (A) but not through the end gashes (42), the cutting portion (22) exhibits N-fold rotational symmetry about the longitudinal axis (A), where N is equal to the greatest common divisor of the number of main flutes (32) and the number of auxiliary flutes (34).

7. The rotary cutting tool (20), according to any one of the preceding claims, wherein:
at least one of the end cutting edges (56) forms an extended end cutting edge (68) that extends to a radially central portion (C) of the cutting portion (22), as seen in an end view of the rotary cutting tool (20) taken along the longitudinal axis (A); and
in each cross sectional view of the cutting portion (22) taken perpendicular to the longitudinal axis (A) through the end gashes (42) the cutting portion (22) has X equal tooth sectors (S) where X is equal to number of end face cutting teeth (48) minus the number of extended cutting edges (68).

8. The rotary cutting tool (20), according to any one of the preceding claims, wherein the number of main and auxiliary flutes (32, 34), respectively, are greater than or equal to 4 and less than or equal to 24.

9. The rotary cutting tool (20), according to any one of the preceding claims, wherein the number of end face cutting teeth (48) is greater than or equal to 2 and less than or equal to 8.

10. The rotary cutting tool (20), according to any one of the preceding claims, wherein the number of main flutes (32) is greater than the number of auxiliary flutes (34).

11. The rotary cutting tool (20), according to any one of the preceding claims; wherein:
the number of main flutes (32) is exactly three times the number of end face cutting teeth (48); and
the number of auxiliary flutes (34) is exactly twice the number of end face cutting teeth (48), and preferably:
the number of end face cutting teeth (48) is 4;
the number of main flutes (32) is 12; and
the number of auxiliary flutes (34) is 8.

12. The rotary cutting tool (20), according to any one of the preceding claims, wherein:
all the main flutes (32) are helically aligned about the longitudinal axis (A) with a main flute helix (H1) having a main flute helix angle (α);
all the auxiliary flutes (34) are helically aligned about the longitudinal axis (A) with an auxiliary flute helix (H2) having an auxiliary flute helix angle (β); and
the main flute helix angle (α) is less than the auxiliary flute helix angle (β) in absolute value.

13. The rotary cutting tool (20), according to any one of the preceding claims, wherein each of the main flutes (32) and each of the auxiliary flutes (34) open out to the end face surface (28) or to one of the end gashes (42).

14. The rotary cutting tool (20), according to any one of the preceding claims, wherein each of the end gashes (42) has a gash angle δ, each gash angle δ being in the range 30° < δ < 50°.

15. The rotary cutting tool (20), according to any one of the preceding claims, wherein each end cutting edge (56) defines a dish angle (θ), as measured with respect to a dish plane (P) that is oriented perpendicularly to the longitudinal axis (A).

## Patentansprüche

1. Drehschneidwerkzeug (20) mit einer Längsachse (A), um die das Drehschneidwerkzeug (20) in einer Drehrichtung (R) drehbar ist, wobei das Drehschneidwerkzeug (20) aufweist:
einen Schneidabschnitt (22) und einen sich davon erstreckenden Montageabschnitt (24), wobei der Schneidabschnitt (22) aufweist:
eine Stirnfläche (28), die durch die Längsachse (A) geschnitten wird, und eine Umfangsfläche (30), die sich von der Stirnfläche (28) in Richtung zum Montageabschnitt (24) erstreckt, wobei die Umfangsfläche (30) eine Mehrzahl von darin vertieft ausgebildeten Hauptnuten (32) aufweist, die sich spiralförmig um die Längsachse (A) erstrecken;
eine Mehrzahl von auf der Stirnfläche (28) ausgebildeten Stirnflächen-Schneidzähnen (48), wobei jeder Stirnflächen-Schneidzahn (48) eine Hauptfläche (54), die allgemein der Drehrichtung (R) zugewandt ist, und eine Schneidkante (56) aufweist, die an der Schnittlinie zwischen der Stirnfläche (28) und der Hauptfläche (54) ausgebildet ist, wobei jeder Stirnflächen-Schneidzahn (48) zwischen in der Umfangsrichtung benachbarten Stirnaussparungen (42) definiert ist, wobei jede der Stirnaussparungen (42) eine Schnittlinie der Umfangsfläche (30) mit der Stirnfläche (28) an einer zugeordneten der Mehrzahl von Hauptnuten (32) unterbricht,
wobei die Stirnaussparungen (42) in der Umfangsrichtung in Bezug auf die Hauptnuten (32) gleichmäßig verteilt sind, und
in jeder Querschnittansicht des Schneidabschnitts (22) senkrecht zur Längsachse (A) durch die Stirnaussparungen (42) eine gedachte Konturlinie (LC), die durch eine Umfangskontur (PC) der Umfangsfläche (30) eines der Stirnflächen-Schneidzähne (48) definiert ist, in Bezug auf die Drehbewegung um die Längsachse (A) mit der Umfangskontur (PC) der Umfangsflächen (30) aller anderen Stirnflächen-Schneidzähne (48) ausgerichtet ist;
**dadurch gekennzeichnet, dass**:
die Umfangsfläche (30) eine Mehrzahl von darin vertieft ausgebildeten Nebennuten (34) aufweist, die sich spiralförmig um die Längsachse (A) in entgegengesetzter Richtung zu der Mehrzahl von Hauptnuten (32) erstrecken; und
die Anzahl der Hauptnuten (32) und der Nebennuten (34) unterschiedlich sind, wobei jede vollständig durch die Anzahl der Stirnflächen-Schneidzähne (48) teilbar und größer als die Anzahl der Stirnflächen-Schneidzähne ist.

2. Drehschneidwerkzeug (20) nach dem vorangehenden Anspruch, wobei:
die Hauptnuten (32) gleichmäßig voneinander beabstandet sind; und
die Nebennuten (34) gleichmäßig voneinander beabstandet sind.

3. Drehschneidwerkzeug (20) nach einem der vorangehenden Ansprüche, wobei sich jede Stirnaussparung (42) in der Umfangsrichtung entlang der Schnittlinie zwischen der Stirnfläche (28) und der Umfangsfläche (30) in der Drehrichtung (R) erstreckt und genau zwei benachbarte Hauptnuten (32) entlang der Schnittlinie unterbricht.

4. Drehschneidwerkzeug (20) nach einem der vorangehenden Ansprüche, wobei sich jede Stirnaussparung (42) in Richtung zum Montageabschnitt (24) erstreckt und mindestens zwei, vorzugsweise genau zwei, Nebennuten (34) auf der Umfangsfläche (30) unterbricht.

5. Drehschneidwerkzeug (20) nach einem der vorangehenden Ansprüche, wobei sich benachbarte Paare von Haupt- und Nebennuten (32, 34) auf der Umfangsfläche (30) schneiden, um diskrete Umfangsschneidzähne (36) zu bilden, wobei vorzugsweise jeder Umfangsschneidzahn (36) aufweist:
eine Hauptumfangsschneidkante (38), die an der Schnittlinie zwischen der Umfangsfläche (30) und der in Drehrichtung führenden Hauptnut (32) des benachbarten Paars von Hauptnuten (32) ausgebildet ist; und
eine Nebenumfangsschneidkante (40), die an der Schnittlinie zwischen der Umfangsfläche (30) und der in Drehrichtung führenden Nebennut (34) des benachbarten Paars von Nebennuten (34) ausgebildet ist, wobei sich vorzugsweise eine Umfangsfreifläche (41) zwischen der Hauptumfangsschneidkante (38) und der Nebenumfangsschneidkante (40) auf jedem Umfangsschneidzahn (36) erstreckt.

6. Drehschneidwerkzeug (20) nach einem der vorangehenden Ansprüche, wobei in jeder Querschnittansicht des Schneidabschnitts (22) senkrecht zur Längsachse (A), aber nicht durch die Stirnaussparungen (42), der Schneidabschnitt (22) eine N-fache Rotationssymmetrie um die Längsachse (A) aufweist, wobei N gleich dem größten gemeinsamen Teiler der Anzahl der Hauptnuten (32) und der Anzahl der Nebennuten (34) ist.

7. Drehschneidwerkzeug (20) nach einem der vorangehenden Ansprüche, wobei:
mindestens eine der Endschneidkanten (56) eine verlängerte Endschneidkante (68) bildet, die sich, betrachtet in einer Endansicht des Drehschneidwerkzeugs (20) entlang der Längsachse (A), zu einem radial mittigen Abschnitt (C) des Schneidabschnitts (22) erstreckt, und
in jeder Querschnittansicht des Schneidabschnitts (22) senkrecht zur Längsachse (A) durch die Stirnaussparungen (42) der Schneidabschnitt (22) X gleiche Zahnsektoren (S) aufweist, wobei X gleich der Anzahl der Stirnflächen-Schneidzähne (48) minus der Anzahl der verlängerten Endschneidkanten (68) ist.

8. Drehschneidwerkzeug (20) nach einem der vorangehenden Ansprüche, wobei die Anzahl der Haupt- und der Nebennuten (32, 34) jeweils größer oder gleich 4 und kleiner oder gleich 24 ist.

9. Drehschneidwerkzeug (20) nach einem der vorangehenden Ansprüche, wobei die Anzahl der Stirnflächen-Schneidzähne (48) größer oder gleich 2 und kleiner oder gleich 8 ist.

10. Drehschneidwerkzeug (20) nach einem der vorangehenden Ansprüche, wobei die Anzahl der Hauptnuten (32) größer ist als die Anzahl der Nebennuten (34).

11. Drehschneidwerkzeug (20) nach einem der vorangehenden Ansprüche, wobei:
die Anzahl der Hauptnuten (32) genau dem Dreifachen der Anzahl der Stirnflächen-Schneidzähne (48) gleicht, und
die Anzahl der Nebennuten (34) genau dem Doppelten der Anzahl der Stirnflächen-Schneidzähne (48) gleicht, und wobei vorzugsweise:
die Anzahl der Stirnflächen-Schneidzähne (48) 4 beträgt,
die Anzahl der Hauptnuten (32) 12 beträgt, und
die Anzahl der Nebennuten (34) 8 beträgt.

12. Drehschneidwerkzeug (20) nach einem der vorangehenden Ansprüche, wobei:
alle Hauptnuten (32) spiralförmig um die Längsachse (A) mit einer Hauptnutenspirallinie (H1) mit einem Hauptnutenspiralwinkel (α) ausgerichtet sind,
alle Nebennuten (34) spiralförmig um die Längsachse (A) mit einer Nebennutenspirallinie (H2) mit einem Nebennutenspiralwinkel (β) ausgerichtet sind, und
der Hauptnutenspiralwinkel (α) im Absolutwert kleiner als der Nebennutenspiralwinkel (β) ist.

13. Drehschneidwerkzeug (20) nach einem der vorangehenden Ansprüche, wobei jede der Hauptnuten (32) und jede der Nebennuten (34) zur Stirnfläche (28) oder zu einer der Stirnaussparungen (42) offen ist.

14. Drehschneidwerkzeug (20) nach einem der vorangehenden Ansprüche, wobei jede der Stirnaussparungen (42) einen Aussparungswinkel δ aufweist, wobei jeder Aussparungswinkel δ im Bereich 30° < δ < 50° liegt.

15. Drehschneidwerkzeug (20) nach einem der vorangehenden Ansprüche, wobei jede Stirnflächen-Schneidkante (56) einen Hohlwinkel (θ) definiert, gemessen in Bezug auf eine senkrecht zur Längsachse (A) ausgerichtete Ebene (P).

## Revendications

1. Outil de coupe rotatif (20) ayant un axe longitudinal (A) autour duquel l'outil de coupe rotatif (20) peut tourner dans une direction de rotation (R), l'outil de coupe rotatif (20) comprenant :
une partie de coupe (22) et une partie de montage (24) s'étendant à partir de cette dernière, la partie de coupe (22) comprenant :
une surface de face d'extrémité (28), coupée par l'axe longitudinal (A), et une surface périphérique (30) s'étendant à partir de la surface de face d'extrémité (28) vers la partie de montage (24), la surface périphérique (30) comprenant une pluralité de cannelures principales (32) enfoncées dans cette dernière, qui s'étendent de manière hélicoïdale autour de l'axe longitudinal (A) ;
une pluralité de dents de coupe de face d'extrémité (48) formées sur la surface de face d'extrémité (28), chaque dent de coupe de face d'extrémité (48) comprend une surface majeure de dent d'extrémité (54) qui fait généralement face à la direction de rotation (R), et un bord de coupe d'extrémité (56) formé à l'intersection de la surface de face d'extrémité (28) et de la surface majeure de dent d'extrémité (54), chaque dent de coupe de face d'extrémité (48) étant définie entre des entredents d'extrémité (42) circonférentiellement adjacents, dont chaque entredent d'extrémité (42) interrompt une intersection de la surface périphérique (30) avec la surface de face d'extrémité (28) au niveau d'une cannelure associée de la pluralité de cannelures principales (32) ; dans lequel :
les entredents d'extrémité (42) sont répartis de manière régulièrement circonférentielle par rapport aux cannelures principales (32) ; et
sur chaque vue en coupe de la partie de coupe (22), prise perpendiculairement à l'axe longitudinal (A) à travers les entredents d'extrémité (42), une ligne de contour imaginaire (LC) définie par un contour périphérique (PC) de la surface périphérique (30) de l'une des dents de coupe de face d'extrémité (48) est en relation alignée de manière rotative, autour de l'axe longitudinal (A), avec le contour périphérique (PC) des surfaces périphériques (30) de toutes les autres dents de coupe de face d'extrémité (48) ; **caractérisé en ce que** :
la surface périphérique (30) comprend une pluralité de cannelures auxiliaires (34) enfoncées dans cette dernière, qui s'étendent de manière hélicoïdale autour de l'axe longitudinal (A) du côté opposé à la pluralité de cannelures principales (32) ; et
le nombre de cannelures principales (32) et le nombre de cannelures auxiliaires (34) sont différents, chacun étant complètement divisible et supérieur au nombre de dents de coupe de face d'extrémité (48).

2. Outil de coupe rotatif (20) selon la revendication précédente, dans lequel :
les cannelures principales (32) sont espacées à égale distance ; et
les cannelures auxiliaires (34) sont espacées à égale distance.

3. Outil de coupe rotatif (20) selon l'une quelconque des revendications précédentes, dans lequel chaque entredent d'extrémité (42) s'étend de manière circonférentielle le long de l'intersection de la surface de face d'extrémité (28) et de la surface périphérique (30), dans la direction de rotation (R) et interrompt exactement deux cannelures principales (32) adjacentes le long de ladite intersection.

4. Outil de coupe rotatif (20) selon l'une quelconque des revendications précédentes, dans lequel chaque entredent d'extrémité (42) s'étend vers la partie de montage (24) et interrompt au moins deux et de préférence exactement deux cannelures auxiliaires (34) sur la surface périphérique (30).

5. Outil de coupe rotatif (20) selon l'une quelconque des revendications précédentes, dans lequel les paires adjacentes de cannelures principales et auxiliaires (32, 34) se coupent sur la surface périphérique (30) pour former des dents de coupe périphériques discrètes (36) et de préférence chaque dent de coupe périphérique (36) comprend :
un bord de coupe périphérique principal (38) formé à l'intersection de la surface périphérique (30) et de la cannelures principale d'attaque rotative (32) de la paire adjacente de cannelures principales (32) ; et un bord de coupe périphérique auxiliaire (40) formé à l'intersection de la surface périphérique (30) et de la cannelure auxiliaire d'attaque rotative (34) de la paire adjacente de cannelures auxiliaires (34), et encore de préférence une surface de relief périphérique (41) s'étend entre le bord de coupe périphérique principal (38) et le bord de coupe périphérique auxiliaire (40) sur chaque dent de coupe périphérique (36).

6. Outil de coupe rotatif (20) selon l'une quelconque des revendications précédentes, dans lequel sur chaque vue en coupe de la partie de coupe (22) prise perpendiculairement à l'axe longitudinal (A), mais pas à travers les entredents d'extrémité (42), la partie de coupe (22) présente N fois la symétrie de rotation autour de l'axe longitudinal (A), où N est égal au plus grand diviseur commun du nombre de cannelures principales (32) et du nombre de cannelures auxiliaires (34).

7. Outil de coupe rotatif (20) selon l'une quelconque des revendications précédentes, dans lequel :
au moins l'un des bords de coupe d'extrémité (56) forme un bord de coupe d'extrémité étendu (68) qui s'étend vers une partie radialement centrale (C) de la partie de coupe (22), comme observé sur une vue d'extrémité de l'outil de coupe rotatif (20) prise sur l'axe longitudinal (A) ; et
sur chaque vue en coupe de la partie de coupe (22) prise perpendiculairement à l'axe longitudinal (A) à travers les entredents d'extrémité (42), la partie de coupe (22) a X secteurs de dent (S) égaux, où X est égal au nombre de dents de coupe de face d'extrémité (48) moins le nombre de bords de coupe (68) étendus.

8. Outil de coupe rotatif (20) selon l'une quelconque des revendications précédentes, dans lequel le nombre de cannelures principales et le nombre de cannelures auxiliaires (32, 34) sont respectivement supérieurs ou égaux à 4 et inférieurs ou égaux à 24.

9. Outil de coupe rotatif (20) selon l'une quelconque des revendications précédentes, dans lequel le nombre de dents de coupe de face d'extrémité (48) est supérieur ou égal à 2 et inférieur ou égal à 8.

10. Outil de coupe rotatif (20) selon l'une quelconque des revendications précédentes, dans lequel le nombre de cannelures principales (32) est supérieur au nombre de cannelures auxiliaires (34).

11. Outil de coupe rotatif (20) selon l'une quelconque des revendications précédentes, dans lequel :
le nombre de cannelures principales (32) est exactement trois fois le nombre de dents de coupe de face d'extrémité (48) ; et
le nombre de cannelures auxiliaires (34) est exactement deux fois le nombre de dents de coupe de face d'extrémité (48), et de préférence :
le nombre de dents de coupe de face d'extrémité (48) est de 4 ;
le nombre de cannelures principales (32) est de 12 ; et
le nombre de cannelures auxiliaires (34) est de 8.

12. Outil de coupe rotatif (20) selon l'une quelconque des revendications précédentes, dans lequel :
toutes les cannelures principales (32) sont alignées de manière hélicoïdale autour de l'axe longitudinal (A) avec une hélice de cannelure principale (H1) ayant un angle d'hélice de cannelure principale α ;
toutes les cannelures auxiliaires (34) sont alignées de manière hélicoïdale autour de l'axe longitudinal (A) avec une hélice de cannelure auxiliaire (H2) ayant un angle d'hélice de cannelure auxiliaire (β) ; et
l'angle d'hélice de cannelure principale (α) est inférieur à l'angle d'hélice de cannelure auxiliaire (β) en valeur absolue.

13. Outil de coupe rotatif (20) selon l'une quelconque des revendications précédentes, dans lequel chacune des cannelures principales (32) et chacune des cannelures auxiliaires (34) s'ouvrent vers la surface de face d'extrémité (28) ou vers l'un des entredents d'extrémité (42).

14. Outil de coupe rotatif (20) selon l'une quelconque des revendications précédentes, dans lequel chacun des entredents d'extrémité (42) a un angle d'entredent δ, chaque angle d'entredent δ étant dans la plage de 30° < δ < 50°.

15. Outil de coupe rotatif (20) selon l'une quelconque des revendications précédentes, dans lequel chaque bord de coupe d'extrémité (56) définit un angle de plateau (θ), tel que mesuré par rapport à un plan de plateau (P) qui est orienté perpendiculairement à l'axe longitudinal (A).
